(19) **Europäisches Patentamt / European Patent Office / Office européen des brevets**

(11) **EP 4 474 775 A1**

(12) **EUROPEAN PATENT APPLICATION**

(43) Date of publication:
**11.12.2024 Bulletin 2024/50**

(21) Application number: **23177649.3**

(22) Date of filing: **06.06.2023**

(51) International Patent Classification (IPC):
**G01D 21/00** (2006.01)

(52) Cooperative Patent Classification (CPC):
**G01D 21/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Cumulocity GmbH**
**40211 Düsseldorf (DE)**

(72) Inventors:
• **Channagoudra, Prakashgouda**
**560035 Bangalore (IN)**

• **Narayana, Anireekshita**
**560097 Vidyaranyapura, Bangalore (IN)**
• **Hazarika, Rinku**
**560035 Bangalore (IN)**

(74) Representative: **Goebel, Sebastian**
**Bösherz Goebel Patentanwälte**
**Rheinberger Weg 6**
**40670 Meerbusch (DE)**

Remarks:
Amended claims in accordance with Rule 137(2) EPC.

(54) **METHOD FOR PROVIDING ENERGY MANAGEMENT FOR AT LEAST ONE SENSOR**

(57)     The present invention is related to the field of internet of things (IOT) and particularly relates to a method for providing energy management for at least one sensor. The invention further relates to a system, a computer program and a data processing apparatus for this purpose.

Fig. 1

EP 4 474 775 A1

**Description**

The present invention is related to the field of internet of things (IOT) and particularly relates to a method for providing energy management for at least one sensor. The invention further relates to a system, a computer program and a data processing apparatus for this purpose.

State of the art

It is known that various technological devices or "things" can be used for making life smarter, better, and easier. Many of these devices can be connected via the Internet, and thus, "Internet of Things (IOT)" could become part of everyday life. IOT may be used for monitoring and controlling devices or themselves.

Billions of devices and particularly sensors may be deployed on the field for acquiring a field information. These sensors run preferably on a battery. Since batteries have a limited life, if a battery goes down, then the sensor may be useless and an IOT application may not give the expected quality of service (QOS). It is therefore necessary to take care of replacing or recharging the battery. In this vast field of sensors (for example in a mountain area, in a hilly region, etc.), it may be a difficult task to find and replace the dead battery of a sensor. So, it is particularly a great challenge to keep or save the energy of an IOT network for a longer duration.

It is known that models can be used to plan the states of the sensors to optimize the energy consumption. Such models may be forecasting models such as artificial intelligence (AI), artificial neural network (ANN), and support vector machines (SVM). Known models are particularly created based on the history of how applications call or read those sensors. However, there may be limitations with such models. For example, there may be two applications, one reads temperature sensor data and serves to a user whenever the user requests for the current temperature data (application T). And another application may read humidity sensor data (application H). Person A may use application T every day in the morning and person B may use application H every day in the noon. Based on this data, models may predict the optimal states of these sensors, i.e., they may plan when the sensors should be active or inactive in a way that the energy consumption is optimized. A prediction model, which is designed based on how frequently the user used the application for viewing the temperature, may therefore predict when the sensor should be ON or OFF. However, if many people start using the application at different time intervals, then the model may fail to predict this random request arrival and fail to give better QOS.

US10712723B2 particularly discloses an analysis of energy consumption of end appliances. Based on a consumption pattern, the platform may inform a user when their hourly consumption goes beyond the predefined budget. To achieve this, extra sensors may be necessary.

US10433270B1 discloses in particular a saving controller (coordinator) battery with fixed configured time intervals based on usage time intervals and patterns for keeping devices ON/OFF. As it particularly depends only on fixed time intervals for deciding coordinator state, there may be no scope of improvement of the system performance even if there is a continuous flow of data into the system.

In US9007225, a decentralized system is described where particularly logic is embedded in each sensor unit. This sensor unit may be kept in low-power mode and may be awake on detecting anomalous condition. However, it may be restricted to be operated on live data.

The discussed state-of-the-art documents are particularly designed for a specific domain and/or protocol. They may be less optimal in situation where a randomness or higher level of variation occurs in the system that influences the activity of the sensors. For example, some are particularly specific to certain domains like consumer appliances and focus around electricity consumption only. As this is specific to a certain domain, solutions of the prior art may not be capable of handling sensor data which uses different protocols to communicate.

It is therefore an object of the present invention to at least partially overcome the disadvantages described above. It is particularly an object of the present invention to provide a better energy management for sensors.

Disclosure of the invention

According to aspects of the invention, a method with the features of claim 1, a system with the features of claim 13, a computer program with the features of claim 14 as well as a data processing apparatus with the features of claim 15 are provided. Further features and details of the invention are disclosed in the respective dependent claims, the description, and the drawings. Features and details described in the context to the method according to the invention also correspond to the system according to the invention, the computer program according to the invention as well as the data processing apparatus according to the invention, and vice versa in each case.

According to a first aspect of the invention, a method for providing energy management for at least one sensor is provided. The method may particularly be a computer-implemented method.

The method according to the invention may comprise collecting sensor data. The sensor data may result from a detection by the at least one sensor. Furthermore, the sensor data may comprise sensor values specific to a characteristic to be detected by the at least one sensor. For example, the characteristic to be detected may be a measurand that is measured by the at least one sensor. The sensor values therefore may quantify the measurand. The collection of the sensor data particularly comprises receiving the sensor data in the form of digital data, preferably using a data stream and/or using a data network and/or over the internet and/or over a wireless network. To this end, a network interface may be used to receive the sensor data. The collection of the sensor data may further comprise a caching and/or non-volatile storage of the data, particularly in a data memory.

The method according to the invention may further comprise evaluating the collected sensor data. The evaluating may comprise generating, particularly planning and/or predicting, an operating specification that particularly indicates at least one or multiple optimal operating state(s) for the at least one sensor. The operating specification may be generated for the at least one sensor based on the sensor values of the collected sensor data, particularly based on a detection of at least one deviation pattern in the sensor values of the collected sensor data that indicates a variation of the characteristic to be detected. In other words, the future operational states of the at least one sensor may be planned by an evaluation of the content of the collected sensor data, thereby particularly predicting the states in form of optimal states for optimizing the energy consumption of the at least one sensor.

Furthermore, the method according to the invention may comprise initiating at least one change of an operational setting for the detection by the at least one sensor. The change may be initiated based on the generated operating specification. For example, the state of the at least one sensor may thereby be set in accordance with the states planned in the operating specification. The initiating may be possible by sending a command and/or configuration data to the at least one sensor using a data interface, particularly a network interface.

The sensor data may, in simple terms, represent or comprise sensor values of what is to be measured by the sensor, for example a voltage of a battery. Therefore, the evaluation is not limited to "meta information" about the sensor measurements, for example a time of transmission of the sensor data. In said example, the characteristic to be detected would be the voltage of the battery. The operating specification may, in simple terms, describe how the operational setting for the detection is to be changed, for example in relation to a date and time or as a function of at least one and/or different features of the sensor data, for example the at least one deviation pattern. The generating of the operating specification may comprise or be performed as a prediction since it provides an assumption of the future operational states of the at least one sensor. The generating of the operating specification may be performed by a computer-implemented algorithm and/or by a prediction model like a rule-based engine (EMS). The algorithm may be designed to minimize energy consumption by means of providing optimal future operational settings for the detection by the at least one sensor based on historical sensor data. The operating specification may be advantageous to, for example, optimize a duration and/or a time and date of when the at least one sensor is carrying out the detection so that the energy consumption by the sensor may be optimized, particularly minimized.

It is possible that the generating is based on the detection of the at least one deviation pattern in the sensor values of the collected sensor data, the sensor values preferably being measured values, particularly measured physical values, which represent a quantification of the characteristic to be detected, the characteristic particularly being a measurand. The operating specification may define a future activity pattern for the detection by the at least one sensor, particularly comprising future operational states for the at least one sensor. A simple example for the above may be that a sensor is measuring a temperature, which would be the characteristic to be detected, wherein one exemplary sensor value may be 20°C. An exemplary deviation pattern in this particular example may reveal that the temperature on Mondays is roughly constant between 7 AM and 11 AM and rises significantly between 11 AM and 12 PM.

It may be provided that the generating of the operating specification for the at least one sensor is further based on at least one of the following:

- a detection time indicating a time of detection or transmission of the sensor values by the least one sensor,
- a change time indicating a time of change of the sensor values,
- a deviation indicator for the sensor values, particularly based on a standard deviation of a series of the sensor values.

The change time may indicate a specific time, for example "1:43 PM", or it may indicate a time frame, for example "between 1 PM and 2 PM" or "Tuesday". The deviation indicator may quantify a specific deviation in the sensor values or in a series of the sensor values, preferably quantified by means of the respective standard deviation. An example may be that the standard deviation of the sensor values between 1 PM and 2 PM is 0.4. The above factors may further contribute to optimize the time of when the at least one sensor is carrying out the detection so that the energy consumption may be minimized.

It may be advantageous if the evaluating comprises applying at least one rule based on the sensor values of the collected sensor data, particularly using a rule-based engine. The initiating of the change of the operational setting may be carried out based on the applied at least one rule. The at least one rule may comprise at least one of the following rules:

- Applying a procedure to derive a standard deviation to detect the at least one deviation pattern in the collected sensor data of the at least one sensor and deciding on the operating specification based on the procedure to derive the standard deviation.
- Applying at least one external environmental monitoring system, particularly to predict external changes of an environment of the at least one sensor, and deciding on the operating specification based on an output of the at least one external environmental monitoring system.

Applying the at least one rule may be an application of at least one "if-then" statement and may be implemented in the form of an algorithm. A simple example for a rule may be that the initiating of the change of the operational setting is carried out if a sensor value is above a defined threshold. Applying the at least one rule may bring about the advantage that specific conditions may be set out by the rules to further optimize a timing of the initiating of the change of the operational setting and thereby decrease the energy consumption.

Furthermore, the application of the at least one rule may be carried out using a decision tree. The decision tree is an algorithm that relies on a rule-based logic. It may utilize a hierarchical structure of decision rules to analyze the sensor data. Exemplarily variants of the decision tree algorithm may be the ID3, C4.5, or CART algorithm. The rule-based engine may therefore also be configured as or may be part of a prediction model.

It is possible that the method further comprises:

- receiving a flag for the at least one sensor, the flag being specific to a sensor type of the at least one sensor, for example comprising at least the following types: a temperature sensor, humidity sensor, motion sensor, proximity sensor, light sensor, accelerometer, pressure sensor, gas sensor, GPS sensor, moisture sensor,
- carrying out the initiating the at least one change of the operational setting based on the received flag, thereby enabling the energy management and/or the application of the rules based on the received flag.

The flag may be set, deleted or checked. The flag may be represented as a Boolean variable, wherein a value of 1 may indicate that the flag is set. Providing the flag may bring about the advantage that the initiating of the at least one change of the operational setting may be carried out specifically as a function of the sensor type of the at least one sensor. It is possible that the flag is only set for certain types of sensors so that the energy management is only enabled for these types of sensors.

It is further conceivable that a continuous learning and optimization of the generating of the operating specification and particularly of the detection of the at least one deviation pattern is carried out, the continuous learning and optimization comprising periodically updating the generated operating specification based on further collected sensor data of the at least one sensor, the continuous learning and optimization comprising particularly the following steps:

- collecting further sensor data of the at least one sensor,
- carrying out the evaluating of the further collected sensor data, thereby amending, or replacing the operating specification based on the sensor values of the further collected sensor data.

The continuous learning and optimization of the generating of the operating specification may provide the advantage of overall better energy saving, particularly because the at least one change of the operational setting may be initiated more frequently. Furthermore, a prediction model may be applied. However, it is possible for the prediction model to rely on technologies other than machine learning. For example, the prediction model can be configured as a rule-based engine (EMS) and/or expert system. The continuous learning may comprise incrementally updating and improving the prediction model's performance over time as new sensor data becomes available. It may involve adapting the prediction model's parameters or structure to incorporate new information while preserving previously learned knowledge. For example, a feedback loop may iteratively refine and adjust the prediction model based on the evaluation of its performance on the new sensor data, ensuring ongoing improvement and adaptation. Further possibilities for implementing a continuous learning may be the usage of rule induction techniques to automatically generate new rules from new data.

In a particular embodiment, the operating specification specifies a pattern of the at least one change of the operational setting, comprising a sequence of changes of the operational setting over time, particularly comprising different operational settings and/or states of the operation of the at least one sensor over time.

Further, it may be provided that the operational settings include at least one of the following settings, particularly (operational) states:

- a sleep state in which a receiving of commands of the at least one sensor is enabled and a transmission of the sensor data from the at least one sensor is disabled, the initiating the at least one change of the operational setting being carried out by sending at least one of the commands to the at least one sensor,
- an awake state in which the receiving of commands and the transmission of the sensor data from the at least one sensor is enabled,
- a rate at which the detection by the at least one sensor takes place, particularly at which sensor values are collected.

Furthermore, the at least one sensor may be initially in the awake state for a defined timeframe to provide the collected sensor data for the evaluating. Each of the above settings may have an advantage with regard to a specific time and date and/or a specific environmental condition. Providing a variety of the above settings may allow for an advantageous diversification so that the energy consumption may be minimized by utilizing an appropriate setting for a specific time and date and/or for a specific environmental condition.

In an example, the method further comprises:

- calculating a mean and a standard deviation of the collected sensor data over a defined time period,
- generating the operating specification for the at least one sensor based on the calculated mean and standard deviation of the collected sensor data.

The defined time period is for example one hour or one day and may advantageously be varied according to specific requirements and a specific environment of the at least one sensor.

It may be provided that the generating of the operating specification is further based on an external environmental monitoring, the external environmental monitoring particularly being performed by an external prediction model. The external environmental monitoring may be designed to predict a weather or rain, i.e. a weather or rain forecasting model. The external environmental monitoring could be any existing system used to predict environmental changes for example, rain, pressure, humidity etc.

It is also possible that the generating of the operating specification is further based on an external user access monitoring. The external environmental monitoring may comprise measuring environmental parameters, for example a temperature or an atmospheric pressure. The external environmental monitoring may be advantageous, because an influence of the environment on the energy consumption of the battery may then be taken into account to further minimize energy consumption. The external user access monitoring may track an amount of users accessing the sensor so that the operational setting may advantageously be set accordingly when a certain number of users accesses the sensor. If a large number of users accesses the application, then there may be an increase in sensor readings and a greater variation in the sensor reading values. However, in some embodiments, there may be no direct correlation between some operational settings (for example On/Off/Sleep) and the number of users. In other words, the number of users accessing the system according to the invention for sensor data may have no impact on the decision-making process for generating the operational settings, and particularly, whether to change the sensor to On, Off or Sleep mode. The system may be a central system which is connected to the sensors and control the state of the sensors based on the deviation pattern. With more data, which increases the sensor data points over time, the prediction of the system can become more accurate.

In another embodiment, the method further comprises monitoring a battery of the at least one sensor, thereby indicating a low battery status of the battery, the low battery status preferably being alerted to a user and/or the generating of the operating specification being based on the indicated low battery status.

The monitoring may be performed by periodically measuring at least one parameter of the battery, for example a voltage. The low battery status may be indicated at a defined level of said at least one parameter, for example if the current measurement indicates a value of a tenth of a maximum value of the at least one parameter of the battery. By means of the monitoring of the battery, it may advantageously be provided that if the low battery status is indicated, the at least one change of the operational setting for the detection by the at least one sensor is initiated more frequently to save energy.

It is further possible that the method further comprises changing the operational setting for the detection of the at least one sensor based on at least one trigger, the at least one trigger comprising at least a signal indicating an external event, particularly a user input, and/or a time event and/or a specific deviation pattern and/or a specific timepoint of a low battery status of the at least one sensor. The specific deviation pattern may be a significantly high or low value or a same value for a certain time span in the sensor data. Providing the at least one trigger may further diversify how and when the operational setting for the detection of the at least one sensor may be changed so that the saving of energy may be further optimized.

Another aspect of the invention is a system for providing energy management of at least one sensor, comprising at least:

- a data collection unit for collecting sensor data, the sensor data resulting from a detection by the at least one sensor, the sensor data comprising sensor values specific to a characteristic to be detected by the at least one sensor,
- an evaluation unit for evaluating the collected sensor data, the evaluating comprising generating an operating specification for the at least one sensor based on the sensor values of the collected sensor data, particularly based on a detection of at least one deviation pattern in the sensor values of the collected sensor data that indicates a variation of the characteristic to be detected,

- a control unit for initiating at least one change of an operational setting for the detection by the at least one sensor, the change being initiated based on the generated operating specification.

Thus the system according to the invention has the same advantages as have been described in detail with reference to the method according to the invention. Furthermore, the system may be domain-agnostic, i.e., particularly not be specific to any domain, like consumer appliances, and/or it may be applicable to multiple of different sensor types as well as different kinds of protocols that they use for communication.

Preferred embodiments of the system according to the invention may be configured as a centralized platform, wherein the at least one sensor may be connected to the system to have the at least one sensor monitored for energy saving. It may thus be provided that an extension of the system with further sensors is possible, the sensors being selected according to different functional requirements or environments. It is further possible that at least one sensor is integrated into the centralized platform, i.e. the system.

In another aspect of the invention a computer program may be provided, in particular a computer program product, comprising instructions which, when the computer program is executed by a computer, cause the computer to carry out the method according to the invention. Thus, the computer program according to the invention may have the same advantages as have been described in detail with reference to a method according to the invention.

The computer may be a data processing device which executes the computer program. The computer may include at least one processor that can be used to execute the computer program. Also, a non-volatile data memory may be provided in which the computer program may be stored and from which the computer program may be read by the processor for being carried out.

According to another aspect of the invention a data processing apparatus may be provided which comprises the computer program according to the invention. The data processing apparatus may be a computer and may comprise a data storage device such as a hard disk and/or a non-volatile memory and/or a memory card and/or a solid-state drive. The storage medium may, for example, be integrated into the computer.

Furthermore, the method according to the invention may be implemented as a computer-implemented method.

Further advantages, features and details of the invention will be apparent from the following description, in which embodiments of the invention are described in detail with reference to the drawings. In this connection, the features mentioned in the claims and in the description may each be essential to the invention individually or in any combination. Showing:

Fig. 1    a schematic drawing of a method, computer program and data processing apparatus according to particular embodiments of the invention,

Fig. 2    a schematic drawing of a system according to particular embodiments of the invention,

Fig. 3    a schematic drawing of an energy efficiency model according to particular embodiments of the invention,

Fig. 4    a flow chart of another embodiment of the Energy Management System.

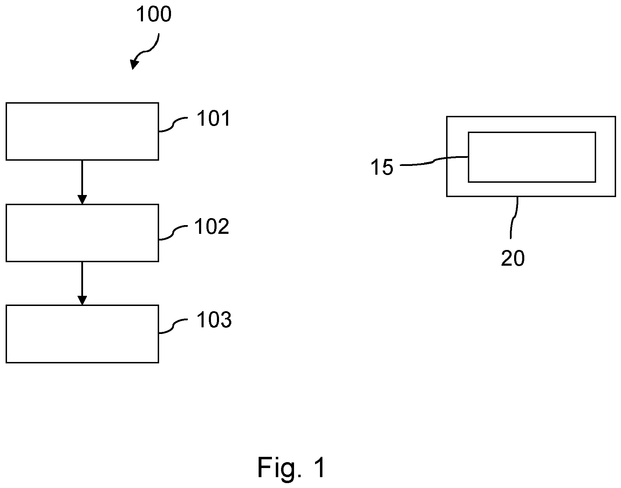

Fig. 1 shows a method 100, a data processing apparatus 20 and a computer program 15 according to particular embodiments of the invention. The computer program 15 may be implemented on the data processing apparatus 20, for example in the form of a computer server or local personal computer. In a preferred embodiment, the computer program 15 may be executed on the data processing apparatus 20 comprising a processor, particularly central processing unit (CPU), memory modules, and input/output devices. The computer program 15, stored in the memory modules, may include a set of instructions that, when executed by the processor, enables the data processing apparatus 20 to perform specific operations and functions. The hardware components of the data processing apparatus 20 may be designed to facilitate efficient execution of the computer program 15, with the processor processing the instructions, the memory modules storing and retrieving data, and the input/output devices facilitating communication with external systems or user interactions.

The computer program 15 may interact with the hardware through interfaces and protocols. Furthermore, the data processing apparatus 20 may comprise a data interface for receiving external data that thereby can be provided to the processing according to the computer program 15. The processor of the data processing apparatus 20 may be configured as one of the following: central processing unit (CPU), graphics processing unit (GPU), field-programmable gate array (FPGA), digital signal processor (DSP), application-specific integrated circuit (ASIC), reduced instruction set computing (RISC), complex instruction set computing (CISC), very long instruction word (VLIW).

The method 100 according to embodiments of the invention comprises a first step 101 where sensor data is collected. The sensor data may result from a detection by the at least one sensor 10. The sensor data may comprise sensor values specific to a characteristic to be detected by the at least one sensor 10. In a second step 102 the collected sensor data may be evaluated. The evaluating 102 preferably comprises generating an operating specification for the at least one sensor 10 based on the sensor values of the collected sensor data, particularly based on a detection of at least one deviation pattern in the sensor values of the collected sensor data that indicates a variation of the characteristic to be detected. In a third step 103, at least one change of an operational setting for the detection by the at least one sensor 10 may be initiated. The change may be initiated based on the generated operating specification.

In contrast to known solutions, embodiments of the invention may thereby support a randomness that could occur in the system and/or may support continuous learning. In this context, randomness referred to a random nature or factors that can come from external users or environments. For example, a large number of people may start using the application or there could be a sudden change in the environment temperature and/or humidity etc.

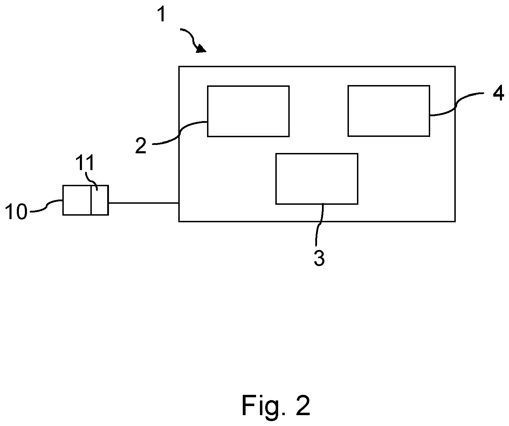

Fig. 2 shows a system 1 according to a preferred embodiment of the invention. The system 1 according to the preferred embodiment comprises a data collection unit 2 for collecting 101 sensor data. The sensor data may result from a detection by the at least one sensor 10. The sensor data may comprise sensor values specific to a characteristic to be detected by the at least one sensor 10. The system 1 according to the preferred embodiment further comprises an evaluation unit 3 for evaluating 102 the collected sensor data. The evaluating 102 may comprise generating an operating specification for the at least one sensor 10 based on the sensor values of the collected sensor data, particularly based on a detection of at least one deviation pattern in the sensor values of the collected sensor data that indicates a variation of the characteristic to be detected. The system may also comprise a control unit 4 for initiating 103 at least one change of an operational setting for the detection by the at least one sensor 10, the change being initiated based on the generated operating specification. The system according to this embodiment is in connection with at least one sensor 10. The at least one sensor 10 may also be integrated into the system 1. The data collection unit 2 may comprise or be embodied as means for carrying out the collecting 101 of the sensor data. The data collection unit 2 may comprise a data interface and/or a data memory for receiving and/or storing the received sensor data. The evaluation unit 3 may comprise or be embodied as means for carrying out the evaluating 102 of the collected sensor data. The evaluation unit 3 may comprise at least one processor and/or may be embodied as a microprocessor or microcomputer. The control unit 4 may comprise or be embodied as means for carrying out the initiating 103 of the at least one change of an operational setting for the detection by the at least one sensor 10. The control unit 4 may comprise an output for sending a command and/or settings to the at least one sensor. The control unit 4 may comprise a hardware interface and/or network interface for sending the command and/or settings to the at least one sensor.

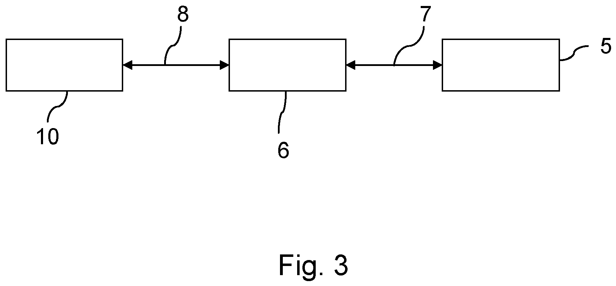

Fig. 3 shows embodiments of an energy efficiency model system 5, particularly energy management system (EMS) 5, that can be deployed in an IOT application 6. The IOT application may read out 8 sensor data from at least one sensor 10. The system according to embodiments of the invention may be capable of efficiently scheduling AWAKE and/or SLEEP states of sensors 10 to save the power to a larger extent in the long term and having satisfied QoS.

Embodiments of the invention may provide an energy management of the sensors 10 that considers how the readings of the sensors 10 changed in the past. Therefore, the energy management may concern the sensors 10 but not the applications 6 that read out sensor data (see Fig. 3, data sensing 8). As part of the energy management system, a prediction model may be used to control the states of the sensors 10, particularly to turn the sensor 10 ON when it must be turned on and to turn the sensor 10 SLEEP during other time. A prediction model may be trained with historical data 7 of the sensors 10. The historical data 7 may be specific for, e.g.: when the sensors 10 sent the readings, when these readings changed, how much is the standard deviation of the current reading from the previous reading, effect of external conditions like cyclone/thunderstorm/earthquake etc. The system according to embodiments of the invention may be configured to update the prediction model as and when there is a change. The prediction model that may comprise a combination of time series forecasting and weather forecasting. It may also be made use of existing weather forecast models in another embodiment of the system according to embodiments of the invention.

The prediction model may comprise a rule-based engine (EMS). This rule-based system may constantly evaluate a deviation pattern with the help of historical sensor data on which it may decide when sensor 10 should be awake/sleep.

The rule-based engine may carry out its decisions based on at least one of the following rules:

Rule 1 may be: Apply a procedure to derive a standard deviation particularly based on standard deviation theory to detect deviation in the readings and decide on sensor state.
Rule 2 may be: Use of at least one external environmental monitoring system, particularly in the form of an (existing) model, to predict external changes and decide on sensor state.

The more historical data 7 is available the more accurate the deviation pattern may be. Hence with time the system may be more matured. The system can be enhanced and may be integrated into a prediction model, for example in an Arima model.

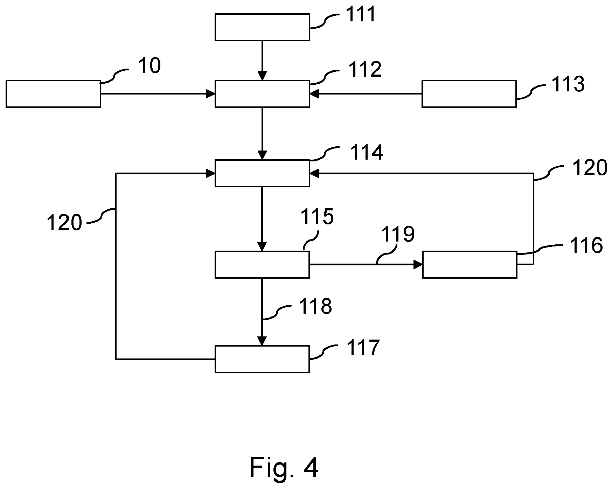

The system according to embodiments of the invention may also use already existing models. Some of these existing models are particularly also used in EMS for handling environmental changes. There may be systems already there for predicting temperature changes, pressure changes etc. In a preferred embodiment, it is made use of these already existing systems in the EMS for better decision making when environmental and/or external changes are predicted. Through another embodiment of the system, one may configure the external models that should be used in EMS. Suppose the system according to embodiments of the invention is configured to use external models such as a 'rain prediction model', then EMS may consider the prediction output of this model to override rule 1 (standard deviation rule) output. The prediction output may be one of, but not limited to, the following. It may be an indication in a weather prediction app, for example an app that predicts rain between 15:00 to 16:00 on a certain day. It may be a single value, i.e., an output of a sensor within the system (a humidity prediction sensor indicating a change in humidity). The user may configure the system to perform energy management based only on a standard deviation or as a combination of a standard deviation and an external environmental monitoring system. In case the user opts for the latter, the user may have to configure the system to indicate the different external sensor/app outputs to be considered for the EMS (this could be more than one). That is, the user may decide to consider the output of a weather prediction app and another sensor within the system to be used for the EMS in combination with a calculation of a standard deviation. The advantage of using an external environmental monitoring system is particularly to improve the accuracy of the system. This can ensure that the EMS does not miss out on any sensor readings when an environmental change takes place. Reference is made to Fig. 4 showing the flowchart or the pseudocode discussed hereinbelow. The EMS may then decide the state of the sensor 10. In the platform it may be configured to use an EMS output of one sensor 10 in another sensor 10.

According to another embodiment, a system is proposed, which may use historical sensor readings. The system may also be referred to as or comprise a platform for energy management of at least one sensor 10. The platform may have a flag to enable EMS for a particular sensor type. So, through this platform one can control whether EMS should be enabled and/or disabled for a particular type of sensor 10. The EMS enabled for one sensor may be independent of the EMS enabled for another sensor 10. However, it may be possible that the system is configured so that a user can configure to use an EMS engine output of one sensor 10 in another EMS engine configured for another sensor 10.

The system according to another embodiment can predict dynamic changes and act accordingly on sensors 10 to save their energy.

In the following, some real-world examples are discussed, where certain embodiments of the invention can be applied.

1. Oceanography example: Moorings particularly are stationary instruments anchored to the seafloor that measure various oceanographic parameters like temperature, salinity and currents. Whenever the parameters are static one can turn certain sensors 10 on and off, only the necessary sensors 10 may be active at any given time, conserving power and prolonging the life of the mooring system. This is particularly useful in long-term monitoring studies where a mooring may need to operate for several years in a remote location.

2. Weather-based crop monitoring sensors 10: Example of energy-saving in smart agriculture by using sensors 10 that can be turned AWAKE and SLEEP using weather-based crop monitoring systems. These systems may use sensors 10 to collect data on various weather parameters, such as temperature, humidity, and rainfall.

3. In the petrochemical industry, it may be required to monitor the level of petrochemicals left in the tank at regular intervals. It is particularly hazardous for a user to do this monitoring task manually. So, sensors 10 may be used for this purpose. These sensors 10 may run on a battery 11 and maintaining battery life of these sensors 10 for a longer duration is in particular very important. If these sensors 10 are ON all the time, then they may run out of battery soon. To avoid this, based on historical data 7, another embodiment can predict when a sensor 10 should be turned ON to monitor the petrochemical level in the tank. Remaining time sensor 10 can be in SLEEP state. This mechanism may help to run a battery 11 for longer duration and avoid interventions by a user.

The system according to preferred embodiments of the invention may be configured as a centralized platform. Decision or deviation pattern detection may happen inside the centralized platform. As it is a centralized system any sensor 10 may be connected to and particularly onboarded over this system to have the sensors monitored for energy saving.

The system according to preferred embodiments of the invention may comprise a detection of deviation patterns in historical readings to take a decision. For example, if there may not be much deviation detected in the historical data pattern over a period of time during certain timeframes, then sensor readings may not be much useful for any analysis/decision making.

Hence the system according to preferred embodiments may set the sensor to SLEEP mode over such timeframes.

The system according to preferred embodiments of the invention may comprise continuous learning and optimization of the interval pattern and thereby overall energy saving. The more data that is present in the system, the better the decision making may be. As the system may be designed to take a decision based on a deviation pattern of historical data, over time as more data gets accumulated in the system the accuracy may improve continuously. For example, if the system may be integrated into an application, in the beginning with less data in the system, the system may turn the sensor to awake/sleep less frequently as the decision making may be based on a minimal amount of data in the system. However, as the system receives more data over a time, the system may have a variety of data points and the system may turn the sensor 10 to awake/sleep more frequently.

The system according to embodiments of the invention may concern saving the energy of an underlying sensor unit itself rather than the coordinator node/end appliances. With this the battery life of sensors 10 may be saved. For the sensors 10 are being used in remote area, it may be hard to change the senor battery frequently. As the system according to embodiments of the invention may increase the sensor battery itself, it may be a great value addition to such ecosystems.

Embodiments of the invention may allow for a combined better decision with easy integration of external systems: Any external application which may help in better decision making that can be easily integrated to certain embodiments of the system. For example, in a system where measuring temperature readings are measured continuously, integrating a rain/weather forecasting external systems may help in better combined decision making when to put the sensor in AWAKE/SLEEP mode.

In the following, a more detailed description of the system according to preferred embodiments of the invention is provided on how the system predicts when sensor should be AWAKE/SLEEP and enables saving sensor energy. The two modes or settings can be defined as:

SLEEP: May be an intermediatory state (battery saver mode) where a sensor 10 can receive commands from the platform, but the sensor 10 cannot transmit data/measurements to the platform.

AWAKE: May be an ON state where the sensor 10 can receive commands from the platform as well as transmit data and/or measurements back to the platform.

As data from sensors 10 may be time-series data, there could be many other ways/approaches to pick the samples and calculate standard deviation. An example would be to get a standard deviation for every hour data vertically (Naive forecasting). According to preferred embodiments, the method as described below is used, which may be designated as Mean Forecasting approach.

According to a first step, it may be assumed that there is a sensor 10 deployed in the field. This sensor 10 may have emitted the data continuously as below. For example, with respect to the oceanography example described above; Moorings may be deployed under the deep sea. They may usually be attached to the bottom of a ship. Moorings are particularly embedded with various sensors to measure underneath currents, temperature, salinity etc. The following table may represent temperature data received from a temperature sensor 10 over a period, wherein the temperature is indicated as °C.

| 1 day ago | 1 week ago | 1 month ago | 1 year ago |
|---|---|---|---|
| 10:00 AM ->30, 10:05 AM ->30, 10:10 AM->30.1 10:15 AM->30 | 10:00 AM ->30.2, 10:05 AM ->30.2, 10:10 AM->30.1 10:15 AM->30.2 | 10:00 AM ->30.2, 10:05 AM ->30.2, 10:10 AM->30.1 10:15 AM->30.15 | 10:00 AM ->30, 10:05 AM ->30, 10:10 AM->30.1 10:15 AM->30 |
| ... ... | ... ... | ... ... | ... ... |
| 11:00 AM->30.1 11:05 AM->30.1 11:10 AM->30.1 11:15 AM->30.15 | 11:00 AM->30.2 11:05 AM->30.15 11:10 AM->30.2 11:15 AM->30.2 | 11:00 AM->30.3 11:05 AM->30.25 11:10 AM->30.3 11:15 AM->30.35 | 11:00 AM->30.3 11:05 AM->30.2 11:10 AM->30.3 11:15 AM->30.3 |
| ... ... | ... ... | ... ... | ... ... |
| 12:00 PM->30 12:05 PM->30.05 12:10 PM->30.05 | 12:00 PM->30.2 12:05 PM->30.25 12:10 PM->30.2 | 12:00 PM->30.3 12:05 PM->30.3 12:10 PM->30.25 | 12:00 PM->30.2 12:05 PM->30.2 12:10 PM->30.25 |
| ... ... | ... ... | ... ... | ... ... |
| 13:00 PM->31 | 13:00 PM->31.2 | 13:00 PM->31.3 | 13:00 PM->31.2 |

(continued)

| 1 day ago | 1 week ago | 1 month ago | 1 year ago |
|---|---|---|---|
| 13:05 PM->31 | 13:05 PM->31.2 | 13:05 PM->31.3 | 13:05 PM->31.25 |
| 13:05 PM->31.5 | 13:05 PM->31.25 | 13:05 PM->31.3 | 13:05 PM->31.25 |
| ... | ... | ... | ... |
| ... | ... | ... | ... |
| and so on | and so on | and so on | and so on |

Initially a temperature sensor 10 attached to a Mooring may be ON(AWAKE) all the time. The sensor 10 may send the data continuously with an interval of time.

These data are particularly recorded in the system and may be considered as historical data 7 in the next steps described hereinafter. These numerical data are preferably stored in a backend against time instances and hence these sensor readings may basically be a timeseries data.

An Energy Management System (EMS) may use all the historical readings of the sensor 10 for deciding. To explain how the EMS according to preferred embodiments of the invention is designed, for simplicity, only major time instances may be considered as in step 2. In the example below, a few sample time data may have been taken. A model may be built with all the historical data of a sensor 10. Initially a prediction model may be trained with lesser data. When new data is received from sensors, the new data may be fed to the prediction model for retraining.

According to a second step, data may be taken out for a few sample time instances as in the table below, wherein the temperature is indicated as °C:

| | Last Day | Last Week | Last Month | Last Year |
|---|---|---|---|---|
| t1(10:00 AM) | 30 | 30.2 | 30.2 | 30 |
| t2(11:00 AM) | 30.1 | 30.2 | 30.3 | 30.3 |
| t3(12:00 PM) | 30 | 30.2 | 30.3 | 30.2 |
| t4(13:00 PM) | 31 | 31.2 | 31.3 | 31.2 |

If for any time instance, sensor readings are not available for Last Day/Week/Month/Year, then such values may be ignored.

According to a third step, the average of all the values at each time instances may be calculated:

t1avg-30.1 °C
t2avg-30.23 °C
t3avg-30.2 °C
t4avg-31.18 °C

According to a fourth step, a calculation of the standard deviation of the above readings may be provided.

$$s = \sqrt{\frac{\sum (X - \bar{x})^2}{n - 1}}$$

- $s$ = sample standard deviation
- $\Sigma$ = sum of...
- $X$ = each value
- $\bar{x}$ = sample mean
- $n$ = number of values in the sample

For the above set of data, standard deviation may be SD= 0.437 (-.44).

According to a fifth step, predictions may be determined. According to an exemplarily first case, a situation is considered when there is no external abstraction predicted by the system.

The system according to preferred embodiments of the invention may predict the state of the sensor 10 based on its historical data as below:

| Time Instances | Sensor Current Status | Sensor Next Status | Comments |
|---|---|---|---|
| t1 | AWAKE (Initial status) | SLEEP (t2avg-t1avg<SD) | Since not much deviation happened historically at t2, the model may predict sensor status to be SLEEP after t1 |
| t2 | SLEEP | SLEEP (t3avg-t2avg<SD) | Since not much deviation happened historically at t3, the model may predict sensor status to be SLEEP after t2 |
| t3 | SLEEP | AWAKE (t4avg-t3avg> SD) | Since sensor readings deviated more at t4, the model may predict sensor status to be AWAKE before t4 |
| t4 | AWAKE | ..and so on | |

It may be seen that the system according to embodiments may be effectively predicting a sensor status based on historical readings and thus, may enable energy saving. The sensor may automatically switch on again after a certain amount of time or depending on the battery life.

According to an alternative embodiment, the EMS System may be integrated with an external system for predicting based on external environmental changes.

According to the alternative embodiment, it may be a sunny day and there may be no changes in the temperature sensor 10 (preferably embedded to Mooring) readings in the past. A standard deviation rule in EMS may have given a decision to keep the temperature sensor OFF. Suddenly an external model may predict (particularly a model embedded with an EMS system) that it is going to rain.

In this situation even if the standard deviation rule may not indicate much deviation in the past for a particular time frame, energy management system may ask the IOT app to turn AWAKE the temperature sensor 10 as there are external environmental changes predicted. Otherwise, sensor 10 may be still in SLEEP state thus saving the energy and particularly making sure the QoS is good.

In the oceanography, the temperature sensor 10 may be considered. In Case 1, the energy management system (EMS) according to embodiments of the invention may have predicted the sensor to be in OFF state. Now, a weather forecasting model, which may be embedded as a part of the EMS, may predict it is going to rain by next time instance. In such case, even if the first case failed (standard deviation), the EMS may signal the IOT app to turn on the temperature sensor because of weather forecasting.

Furthermore, a system according to embodiments of the invention may comprise a low battery 11 indicator. In terms of battery life - if the sensor device is warrantied for X messages. There may be a value in the payload, "mid" which may be a representation of how many messages have been sent since the battery was connected, so one may monitor this to give an indication on battery health.

$$usage = [\ PV\ (mid) * 100] / X$$

usage = Battery used in %

PV(mid) = Present value of mid (total number of messages send till current time)

X = total messages sensor device is warrantied for

$$\%b =\ \ 100 - usage$$

%b = Battery status/health used in % (remaining battery life in %)

Battery health may have a direct correlation with environmental factors like outside temperature, so it may be very much required to maintain sensor operational temperature, else erratic battery performance may occur or faster than expected battery depletion. When low %b is detected then the system may alert the user.

The sensor state in a sensor mesh 10 which is connected to an IOT application 6 may serve its purpose of delivering data in an energy efficient way by means of the Energy Efficiency Model 5 which may predict when sensor data needs to be fetched / put a sensor in AWAKE state based on predictions and factors (involves environmental factors like temperature, deviation, battery health etc.) (cf. Fig. 3).

In the sample data that have been taken to explain the concept, one may conclude how the model according to preferred embodiments of the invention may use historical data to predict sensor_next_state. The model may do a time series forecasting and also use incoming new sensor data to adjust standard deviation continuously. This may provide an outcome in which QOS is much better than that provided by prior art concepts. And, as explained above, the model may be retrained on arrival of a new data set or new data. This may make sure that the prediction model is better trained for better QOS.

Furthermore, a system according to embodiments of the invention may comprise determining when the sensor 10 is to be switched off. Broadly speaking, the amount of change in measured data may be evaluated. In particular, standard deviation may be used as a measure, but any other deviation measure may be acceptable, as well.

According to one embodiment, consecutive measurements may be provided. If the amount of change (e.g., standard deviation or any other measure) over the last X measurements or during the last X time unit (e.g., during the last hour) is below a predetermined value (e.g., calculated standard deviation < predetermined standard deviation), then the sensor 10 is preferably switched off.

According to another embodiment, the amount of change may always be measured at a specific time point (e.g., every day at 10:00), as per the calculation in the preferred embodiment. Unlike the preferred embodiment, the measurements which are taken into account to calculate the amount of change do in particular not necessarily have to be from a day/week/month ago - it is also possible that the values are taken on consecutive days or picked according to any other pattern for that specific time point. Unlike the preferred embodiment, a difference may not be calculated (e.g., t2avg-t1avg<SD). Instead, it may be checked whether the amount of change is below a predetermined value (i.e., calculated standard deviation at 10:00 < predetermined standard deviation). It is possible that for different timepoints or timeframes, there are different predetermined standard deviations.

Also, battery health may be taken into account to switch off sensors 10. For instance, a condition for switching the sensor 10 off may be formulated as follows: (measured standard deviation + f(battery health) < predetermined standard deviation). Wherein, by means of function f, a specific value is derived from the battery health - if the battery health is low, the device may switch off more easily.

Furthermore, the measured value itself may also be taken into account to switch off the sensor 10 (e.g., have a higher tendency to switch off sensor 10 at higher temperatures).

There could be specific triggers for switching the device or the sensor 10 on again. For instance, the device or the sensor 10 could be switched on again depending on any external event (input from another sensor 10, user input, etc.). However, there could also be time-based triggers for switching the device or the sensor 10 on again. The device or the sensor 10 could be switched off for a specific amount of time always (constant value). Alternatively, the length of the time frame may depend on the amount of change (e.g., standard deviation). According to another embodiment, the amount of time that a sensor 10 will be switched off depends both on the amount of change and the amount of battery power left. According to another embodiment, the amount of time that a sensor 10 will be switched off depending on the specific timepoint at which the sensor 10 is switched off. According to another embodiment, the amount of time that a sensor 10 will be switched off depending on the specific sensor value measured (e.g., switch off longer at higher temperatures).

According to another embodiment, the sensor 10 is not switched on or off. Instead, the rate at which measurements are made is modified. High amount of change may lead to a high rate of measurements taken; low amount of change may lead to a low rate of measurements. This rate may be influenced by the factors mentioned before, e.g. amount of change (standard deviation or the like), input from other sensors 10, battery state, current time, and the value which has been actually measured.

In the following, a possible Pseudocode which may tell when a sensor 10 should be AWAKE/SLEEP.

```
SET LOW_SENSOR_BATTERY_ALERT=SLEEP
        WHILE TRUE
                SET SENSOR_AWAKE=false
                WHEN ENV_CHANGES_PREDICTED for Tnext {
                    SET SENSOR_ON=true
                }
                WHEN Svalue_next-Svalue_current > SD then {
                    SET SENSOR_AWAKE=true
                }
                WHEN %Bvalue < Threshold then {
                    SET LOW_SENSOR_BATTERY_ALERT=ON
        END}
```

ENV_CHANGES_PREDICTED: This prediction may happen by a model which is designed offline.
Svalue_next: This may indicate what was the historical sensor reading on next time interval
Svalue_current: This may indicate what the historical sensor reading was on a current time interval
SD: This may indicate a standard deviation calculated for historical readings
%Bvalue: This may indicate a remaining battery life
Threshold: This may indicate a battery functional percentile below which alert may be notified

Fig. 4 shows a flow chart of another embodiment of an Energy Management System.

The uppermost box in Fig. 4 designates a start 111. According to the embodiment of Fig. 4, the sensor 10 may send sensor data to a platform 112 which may result in time series data in a database 113. In a step 114, a deviation pattern may be evaluated. Based on the deviation pattern, at least one rule 115 may be applied. If an output of the application of the rule 115 is true 118, then the Sensor 10 may be set to an awake state 117 and may afterwards be continuously evaluated 120. If the output of the application of the rule 115 is false 119, then the sensor 10 may be set to a sleep state 116 and may afterwards be continuously evaluated 120.

The foregoing explanation of the embodiments describes the present invention in the context of examples. Of course, individual features of the embodiments can be freely combined with each other, provided that this is technically reasonable, without leaving the scope of the present invention.

Reference list

| 1 | system |
| 2 | data collection unit |
| 3 | evaluation unit |
| 4 | control unit |
| 5 | energy management system |
| 6 | IOT application |
| 7 | historical data |
| 8 | data sensing |
| 10 | sensor |
| 11 | battery |
| 15 | computer program |
| 20 | data processing apparatus |
| 100 | method |
| 111 | start |
| 112 | platform |
| 113 | time series data in DB |
| 114 | evaluate deviation pattern |
| 115 | rules |
| 116 | sensor sleep |
| 117 | sensor awake |
| 118 | true |
| 119 | false |
| 120 | continuous evaluation |

**Claims**

1.  A method (100) for providing energy management for at least one sensor (10), comprising:

    - collecting (101) sensor data, the sensor data resulting from a detection by the at least one sensor (10), the sensor data comprising sensor values specific to a characteristic to be detected by the at least one sensor (10),
    - evaluating (102) the collected sensor data, the evaluating (102) comprising generating an operating specification for the at least one sensor (10) based on the sensor values of the collected sensor data, particularly based on a detection of at least one deviation pattern in the sensor values of the collected sensor data that indicates a variation of the characteristic to be detected,
    - initiating (103) at least one change of an operational setting for the detection by the at least one sensor (10), the change being initiated based on the generated operating specification.

2.  The method (100) according to claim 1, wherein the generating is based on the detection of the at least one deviation pattern in the sensor values of the collected sensor data, the sensor values preferably being measured values, particularly measured physical values, which represent a quantification of the characteristic to be detected, the characteristic particularly being a measurand, and the operating specification defining a future activity pattern for the detection by the at least one sensor (10).

3.  The method (100) according to claim 1 or 2, wherein the generating of the operating specification for the at least one sensor (10) is further based on at least one of the following:

    - a detection time indicating a time of detection or transmission of the sensor values by the least one sensor (10),
    - a change time indicating a time of change of the sensor values,
    - a deviation indicator for the sensor values, particularly based on a standard deviation of a series of the sensor values.

4.  The method (100) according to any one of the preceding claims, wherein the evaluating (102) comprises:

    - applying at least one rule based on the sensor values of the collected sensor data, particularly using a rule-based engine (11),
    wherein the initiating (103) of the change of the operational setting is carried out based on the applied at least one rule,
    the at least one rule comprising at least one of the following rules:

        - Applying a procedure to derive a standard deviation to detect the at least one deviation pattern in the collected sensor data of the at least one sensor (10) and deciding on the operating specification based on the procedure to derive the standard deviation,
        - Applying at least one external environmental monitoring system, particularly to predict external changes of an environment of the at least one sensor (10), and deciding on the operating specification based on an output of the at least one external environmental monitoring system.

5.  The method (100) according to claim 4, wherein the method (100) further comprises:

    - Receiving a flag for the at least one sensor (10), the flag being specific to a sensor type of the at least one sensor (10),
    - Carrying out the initiating (103) the at least one change of the operational setting based on the received flag, thereby enabling the energy management and/or the application of the rules based on the received flag.

6.  The method (100) according to any one of the preceding claims, wherein a continuous learning and optimization of the generating of the operating specification and particularly of the detection of the at least one deviation pattern is carried out, the continuous learning and optimization comprising periodically updating the generated operating specification based on further collected sensor data of the at least one sensor (10), the continuous learning and optimization comprising particularly the following steps:

    - collecting further sensor data of the at least one sensor (10),
    - carrying out the evaluating (102) of the further collected sensor data, thereby amending or replacing the operating specification based on the sensor values of the further collected sensor data.

7.  The method (100) according to any one of the preceding claims, wherein the operating specification specifies a pattern of the at least one change of the operational setting, comprising a sequence of changes of the operational setting over time, particularly comprising different operational settings and/or states of the operation of the at least one sensor (10) over time.

8.  The method (100) according to any one of the preceding claims, wherein the operational settings include at least one of the following settings, particularly states:

    - a sleep state in which a receiving of commands of the at least one sensor (10) is enabled and a transmission of the sensor data from the at least one sensor (10) is disabled, the initiating (103) the at least one change of the operational setting being carried out by sending at least one of the commands to the at least one sensor (10),
    - an awake state in which the receiving of commands and the transmission of the sensor data from the at least one sensor (10) is enabled,
    - a rate at which the detection by the at least one sensor (10) takes place, particularly at which sensor values are collected,

    the at least one sensor (10) particularly being initially in the awake state for a defined timeframe to provide the collected sensor data for the evaluating (102).

9. The method (100) according to any one of the preceding claims, wherein the method (100) further comprises:

   - calculating a mean and a standard deviation of the collected sensor data over a defined time period,
   - generating the operating specification for the at least one sensor (10) based on the calculated mean and standard deviation of the collected sensor data.

10. The method (100) according to any one of the preceding claims, wherein the generating of the operating specification is further based on an external environmental monitoring, the external environmental monitoring particularly being performed by an external model (12), and/or
   wherein the generating of the operating specification is further based on an external user access monitoring.

11. The method (100) according to any one of the preceding claims, wherein the method (100) further comprises:

   - Monitoring a battery (13) of the at least one sensor (10), thereby indicating a low battery status of the battery (13), the low battery status preferably being alerted to a user and/or the generating of the operating specification being based on the indicated low battery status.

12. The method (100) according to any one of the preceding claims, wherein the method (100) further comprises:

   - Changing the operational setting for the detection of the at least one sensor (10) based on at least one trigger, the at least one trigger comprising at least a signal indicating an external event, particularly a user input, and/or a time event and/or a specific deviation pattern and/or a specific timepoint of a low battery status of the at least one sensor (10).

13. A system (1) for providing energy management of at least one sensor (10), comprising:

   - a data collection unit (2) for collecting (101) sensor data, the sensor data resulting from a detection by the at least one sensor (10), the sensor data comprising sensor values specific to a characteristic to be detected by the at least one sensor (10),
   - an evaluation unit (3) for evaluating (102) the collected sensor data, the evaluating (102) comprising generating an operating specification for the at least one sensor (10) based on the sensor values of the collected sensor data, particularly based on a detection of at least one deviation pattern in the sensor values of the collected sensor data that indicates a variation of the characteristic to be detected,
   - a control unit (4) for initiating (103) at least one change of an operational setting for the detection by the at least one sensor (10), the change being initiated based on the generated operating specification.

14. A computer program (15), comprising instructions which, when the computer program (15) is executed by a computer, cause the computer to carry out the method of any one of claims 1 to 12.

15. A data processing apparatus (20), comprising means for carrying out the method of any one of claims 1 to 12.

**Amended claims in accordance with Rule 137(2) EPC.**

1. A method (100) for providing energy management for at least one sensor (10), comprising:

   - collecting (101) sensor data, the sensor data resulting from a detection by the at least one sensor (10), the sensor data comprising sensor values specific to a characteristic to be detected by the at least one sensor (10),
   - evaluating (102) the collected sensor data, the evaluating (102) comprising generating an operating specification for the at least one sensor (10) based on the sensor values of the collected sensor data, particularly based on a detection of at least one deviation pattern in the sensor values of the collected sensor data that indicates a variation of the characteristic to be detected, the operating specification defining a future activity pattern for the detection by the at least one sensor (10),
   - initiating (103) at least one change of an operational setting for the detection by the at least one sensor (10), the change being initiated based on the generated operating specification,

   wherein the method (100) further comprises:

   - Monitoring a battery (13) of the at least one sensor (10), thereby indicating a low battery status of the battery (13), the generating of the operating specification being based on the indicated low battery status.

2. The method (100) according to claim 1, wherein the generating is based on the detection of the at least one deviation pattern in the sensor values of the collected sensor data, the sensor values preferably being measured values, particularly measured physical values, which represent a quantification of the characteristic to be detected, the characteristic particularly being a measurand.

3. The method (100) according to claim 1 or 2, wherein the generating of the operating specification for the at least one sensor (10) is further based on at least one of the following:

   - a detection time indicating a time of detection or transmission of the sensor values by the least one sensor (10),
   - a change time indicating a time of change of the sensor values,
   - a deviation indicator for the sensor values, particularly based on a standard deviation of a series of the sensor values.

4. The method (100) according to any one of the preceding claims, wherein the evaluating (102) comprises:

   - applying at least one rule based on the sensor values of the collected sensor data, particularly using a rule-based engine (11),
   wherein the initiating (103) of the change of the operational setting is carried out based on the applied at least one rule,
   the at least one rule comprising at least one of the following rules:

      - Applying a procedure to derive a standard deviation to detect the at least one deviation pattern in the collected sensor data of the at least one sensor (10) and deciding on the operating specification based on the procedure to derive the standard deviation,
      - Applying at least one external environmental monitoring system, particularly to predict external changes of an environment of the at least one sensor (10), and deciding on the operating specification based on an output of the at least one external environmental monitoring system.

5. The method (100) according to claim 4, wherein the method (100) further comprises:

   - Receiving a flag for the at least one sensor (10), the flag being specific to a sensor type of the at least one sensor (10),
   - Carrying out the initiating (103) the at least one change of the operational setting based on the received flag, thereby enabling the energy management and/or the application of the rules based on the received flag.

6. The method (100) according to any one of the preceding claims, wherein a continuous learning and optimization of the generating of the operating specification and particularly of the detection of the at least one deviation pattern is carried out, the continuous learning and optimization comprising periodically updating the generated operating specification based on further collected sensor data of the at least one sensor (10), the continuous learning and optimization comprising particularly the following steps:

   - collecting further sensor data of the at least one sensor (10),
   - carrying out the evaluating (102) of the further collected sensor data, thereby amending or replacing the operating specification based on the sensor values of the further collected sensor data.

7. The method (100) according to any one of the preceding claims, wherein the operating specification specifies a pattern of the at least one change of the operational setting, comprising a sequence of changes of the operational setting over time, particularly comprising different operational settings and/or states of the operation of the at least one sensor (10) over time.

8. The method (100) according to any one of the preceding claims, wherein the operational settings include at least one of the following settings, particularly states:

   - a sleep state in which a receiving of commands of the at least one sensor (10) is enabled and a transmission of the sensor data from the at least one sensor (10) is disabled, the initiating (103) the at least one change of the operational setting being carried out by sending at least one of the commands to the at least one sensor (10),

- an awake state in which the receiving of commands and the transmission of the sensor data from the at least one sensor (10) is enabled,
- a rate at which the detection by the at least one sensor (10) takes place, particularly at which sensor values are collected,

the at least one sensor (10) particularly being initially in the awake state for a defined timeframe to provide the collected sensor data for the evaluating (102).

9. The method (100) according to any one of the preceding claims, wherein the method (100) further comprises:

- calculating a mean and a standard deviation of the collected sensor data over a defined time period,
- generating the operating specification for the at least one sensor (10) based on the calculated mean and standard deviation of the collected sensor data.

10. The method (100) according to any one of the preceding claims, wherein the generating of the operating specification is further based on an external environmental monitoring, the external environmental monitoring particularly being performed by an external model (12), and/or
wherein the generating of the operating specification is further based on an external user access monitoring.

11. The method (100) according to any one of the preceding claims, wherein the low battery status is alerted to a user

12. The method (100) according to any one of the preceding claims, wherein the method (100) further comprises:

- Changing the operational setting for the detection of the at least one sensor (10) based on at least one trigger, the at least one trigger comprising at least a signal indicating an external event, particularly a user input, and/or a time event and/or a specific deviation pattern and/or a specific timepoint of a low battery status of the at least one sensor (10).

13. A system (1) for providing energy management of at least one sensor (10), comprising:

- a data collection unit (2) for collecting (101) sensor data, the sensor data resulting from a detection by the at least one sensor (10), the sensor data comprising sensor values specific to a characteristic to be detected by the at least one sensor (10),
- an evaluation unit (3) for evaluating (102) the collected sensor data, the evaluating (102) comprising generating an operating specification for the at least one sensor (10) based on the sensor values of the collected sensor data, particularly based on a detection of at least one deviation pattern in the sensor values of the collected sensor data that indicates a variation of the characteristic to be detected,
- a control unit (4) for initiating (103) at least one change of an operational setting for the detection by the at least one sensor (10), the change being initiated based on the generated operating specification.

14. A computer program (15), comprising instructions which, when the computer program (15) is executed by a computer, cause the computer to carry out the method of any one of claims 1 to 12.

15. A data processing apparatus (20), comprising means for carrying out the method of any one of claims 1 to 12.

100

101

102

103

15

20

Fig. 1

Fig. 2

Fig. 3

Fig. 4

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2019 219889 B3 (GRIESHABER VEGA KG [DE]) 25 March 2021 (2021-03-25) * figures 1-5 * * claims 1-5 * * paragraphs [0002], [0036] - [0039], [0042] - [0046], [0054], [0058], [0059] * | 1-15 | INV. G01D21/00 |
| X | US 9 679 472 B2 (GAGNON GHYSLAIN [CA]; BOUCHARD TOMMY [CA] ET AL.) 13 June 2017 (2017-06-13) * figure 4 * * column 1, line 41 - column 2, line 51 * | 1-15 | |
| X | DE 10 2020 117512 A1 (GRIESHABER VEGA KG [DE]) 5 January 2022 (2022-01-05) * figures 1, 2 * * paragraphs [0008], [0009], [0027] * | 1-15 | |
| X | US 9 575 554 B1 (DOW ELI M [US] ET AL) 21 February 2017 (2017-02-21) * figure 1 * * column 1, lines 7-9 * * column 4, lines 4-19 * | 1-15 | TECHNICAL FIELDS SEARCHED (IPC) G01D |
| A | US 11 204 694 B2 (GOOGLE LLC [US]) 21 December 2021 (2021-12-21) * column 11, lines 6-49 * | 1-15 | |
| A | US 2018/329050 A1 (AMIHOOD PATRICK M [US] ET AL) 15 November 2018 (2018-11-15) * paragraph [0032] * * claim 9 * | 1-15 | |

The present search report has been drawn up for all claims

| Place of search | Date of completion of the search | Examiner |
|---|---|---|
| Munich | 21 November 2023 | Kuchenbecker, J |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

EP 4 474 775 A1

## ANNEX TO THE EUROPEAN SEARCH REPORT
## ON EUROPEAN PATENT APPLICATION NO.

EP 23 17 7649

This annex lists the patent family members relating to the patent documents cited in the above-mentioned European search report.
The members are as contained in the European Patent Office EDP file on
The European Patent Office is in no way liable for these particulars which are merely given for the purpose of information.

21-11-2023

| Patent document cited in search report | Publication date | Patent family member(s) | Publication date |
|---|---|---|---|
| DE 102019219889 B3 | 25-03-2021 | CN 114729827 A | 08-07-2022 |
| | | DE 102019219889 B3 | 25-03-2021 |
| | | EP 4078094 A1 | 26-10-2022 |
| | | KR 20220115990 A | 19-08-2022 |
| | | US 2023021763 A1 | 26-01-2023 |
| | | WO 2021121689 A1 | 24-06-2021 |
| US 9679472 B2 | 13-06-2017 | CA 2809538 A1 | 08-03-2012 |
| | | US 2014320314 A1 | 30-10-2014 |
| | | WO 2012027844 A1 | 08-03-2012 |
| DE 102020117512 A1 | 05-01-2022 | NONE | |
| US 9575554 B1 | 21-02-2017 | NONE | |
| US 11204694 B2 | 21-12-2021 | CN 111149079 A | 12-05-2020 |
| | | CN 111766943 A | 13-10-2020 |
| | | CN 113220115 A | 06-08-2021 |
| | | EP 3673346 A1 | 01-07-2020 |
| | | EP 3722928 A1 | 14-10-2020 |
| | | JP 6851547 B2 | 31-03-2021 |
| | | JP 6861311 B2 | 21-04-2021 |
| | | JP 7296415 B2 | 22-06-2023 |
| | | JP 7340656 B2 | 07-09-2023 |
| | | JP 2020173817 A | 22-10-2020 |
| | | JP 2021099857 A | 01-07-2021 |
| | | JP 2021504771 A | 15-02-2021 |
| | | JP 2022119986 A | 17-08-2022 |
| | | KR 20200036944 A | 07-04-2020 |
| | | KR 20200055157 A | 20-05-2020 |
| | | KR 20200133832 A | 30-11-2020 |
| | | TW 202009650 A | 01-03-2020 |
| | | US 2020064996 A1 | 27-02-2020 |
| | | US 2020285383 A1 | 10-09-2020 |
| | | US 2021132788 A1 | 06-05-2021 |
| | | WO 2020040966 A1 | 27-02-2020 |
| US 2018329050 A1 | 15-11-2018 | CN 110431435 A | 08-11-2019 |
| | | EP 3622310 A1 | 18-03-2020 |
| | | TW 201902266 A | 01-01-2019 |
| | | US 2018329049 A1 | 15-11-2018 |
| | | US 2018329050 A1 | 15-11-2018 |
| | | US 2021072375 A1 | 11-03-2021 |
| | | US 2023115439 A1 | 13-04-2023 |
| | | WO 2018208958 A1 | 15-11-2018 |

EPO FORM P0459

For more details about this annex : see Official Journal of the European Patent Office, No. 12/82

**REFERENCES CITED IN THE DESCRIPTION**

**Patent documents cited in the description**

- US 10712723 B2
- US 10433270 B1
- US 9007225 B